(19) Europäisches Patentamt
European Patent Office
Office européen des brevets

(11) Veröffentlichungsnummer: **0 194 360 B1**

(12) # EUROPÄISCHE PATENTSCHRIFT

(45) Veröffentlichungstag der Patentschrift: **06.06.90**

(21) Anmeldenummer: **85202026.2**

(22) Anmeldetag: **06.12.85**

(51) Int. Cl.⁵: **C08G 59/16,** C08G 18/58, C08G 18/81, C09D 163/00, H01B 3/40

(54) **Durch Strahlung vernetzbare Bindemittel und ihre Verwendung.**

(30) Priorität: **09.03.85 DE 3508450**

(43) Veröffentlichungstag der Anmeldung: **17.09.86 Patentblatt 86/38**

(45) Bekanntmachung des Hinweises auf die Patenterteilung: **06.06.90 Patentblatt 90/23**

(84) Benannte Vertragsstaaten: **AT BE CH DE FR GB IT LI LU NL**

(56) Entgegenhaltungen:
**EP-A- 0 109 744**
**DE-A- 2 618 986**
**DE-A- 3 519 117**
**FR-A- 2 245 726**
**GB-A- 1 336 816**
**GB-A- 2 030 584**

**Die Akte enthält technische Angaben, die nach dem Eingang der Anmeldung eingereicht wurden und die nicht in dieser Patentschrift enthalten sind.**

(73) Patentinhaber: **RÜTGERSWERKE AKTIENGESELLSCHAFT, Mainzer Landstrasse 217, D-6000 Frankfurt am Main 1(DE)**

(72) Erfinder: **Jellinek, Karl, Dr., Mörikeweg 1, D-5860 Iserlohn-Letmathe(DE)**
Erfinder: **Meier, Bert, Dr., Zedernweg 87, D-4230 Wesel(DE)**
Erfinder: **Grundke, Ulrich, Bronkhorststrasse 52, D-4100 Duisburg 12(DE)**

EP 0 194 360 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Bindemittel auf der Basis von Epoxidharzen, die durch Strahlung vernetzt und anschließend durch thermische Behandlung gehärtet werden können.

Derartige Bindemittel haben eine große Bedeutung bei der Herstellung bei Photoresists und Schutzlacken.

Gehärtete Epoxidharze zeichnen sich durch sehr gute mechanische, thermische und chemische Beständigkeiten sowie hervorragende elektrische Eigenschaften aus. Es hat daher auch nicht an Versuchen gefehlt, strahlungsvernetzbare Epoxidharzsysteme für die Elektrotechnik und Elektrotechnik zu entwickeln.

Die Umsetzung von Epoxidharzen auf der Basis von Bisphenol A oder Bisphenol F mit Acrylsäure oder Methacrylsäure führt zu Harzbindemittelsystemen, die durch ihren Gehalt an ungesättigten Vinylgruppen zur Polymerisation und Vernetzung befähigt sind. Derartige Bindemittelsysteme werden beispielsweise in der britischen Patentschrift 10 06 587, in der US-Patentschrift 33 17 465 bzw. auch in der deutschen OS 16 44 817 beschrieben. In Kombination mit Acryl- oder Methacrylsäureestern oder auch Styrol als reaktive polymerisierbare Vinylmonomer-Lösungsmittel finden diese Umsetzungsprodukte Verwendung als strahlungshärtbare Beschichtungsmaterialien oder Gießharze.

Für die Herstellung von UV-Licht-härtenden Überzugsmassen eignen sich diese Systeme jedoch nicht, da ihre Vernetzungsgeschwindigkeit, insbesondere in Gegenwart von Luftsauerstoff, für den Einsatz in der Praxis zu gering ist. In dünnen Schichten behalten diese Massen auch nach der Aushärtung stark klebrige Oberflächen.

Andere strahlungsvernetzbare Überzugsmassen auf der Basis von Reaktionsprodukten von monoethylenisch ungesättigten Carbonsäuren und Bisphenol- und/oder Novolak-Epoxidharzen haben den Nachteil einer relativ großen Unbeständigkeit, die eine Inhibierung erfordert. Außerdem ist eine Aufbewahrung nur für kurze Zeit möglich.

Weiterhin ist nach der US-PS 26 35 929 die Herstellung von photopolymerisierbaren Epoxidharzen bekannt, die als charakteristische photopolymerisierbare Einheit ungesättigte Gruppen vom Chalkon-Typ enthalten.

Diese Bindemittel zeichnen sich zwar durch eine verbesserte Wirkungsweise, d.h. schnellere Aushärtungszeiten aus, sind jedoch aufgrund ihrer kompliziert aufgebauten Struktur wirtschaftlich nicht kostengünstig herstellbar.

Außerdem führt bei den Chalkon-Strukturen die Einstrahlung aktinischen Lichts im wesentlichen zu Cycloadditionen unter Bildung von Cyclobutanen. Die hierdurch bedingte relativ geringe Vernetzungsdichte kann besonders in Fällen aggressiver Chemikalien bei Ätz- und Lötprozessen zu negativen Anlöse- bzw. Quellerscheinungen führen.

US-PS-3 956 043 offenbart ein photosensitives Epoxidharz, das die photosensitive Gruppe im Molekül enthält und zur Herstellung von Photoresists und Schutzlacken eingesetzt werden kann. Der Nachteil dieses Systems liegt allerdings in der relativ langen Belichtungszeit, die durch die hohe Eigenabsorption dieses Bindemittelsystems verursacht wird.

Alle bisherigen UV- und thermisch härtbaren Bindelmittelsysteme auf der Basis von Epoxidharzen haben die Nachteile, daß sie entweder nicht in wirtschaftlichen Zeiten aushärten, oder nach der Aushärtung noch klebrige Oberflächen erhalten, oder aber zu geringe Lagerstabilitäten haben, oder daß die Polymerisationsreaktion unter dem Einfluß der UV-Strahlen auch an den Stellen stattfindet, wo keine Belichtung stattfinden soll (Unterwanderungsvernetzung).

Aufgabe der vorliegenden Erfindung ist daher die Bereitstellung von UV-vorvernetzbaren und thermisch nachhärtbaren Bindemittelsystemen auf der Basis von Epoxidharzen, die sich nach bekannten Umsetzungsreaktionen wirtschaftlich herstellen lassen und gegenüber den bisher bekannten UV-vorvernetzbaren und anschließend thermisch nachhärtbaren Systemen für die Anwendung als Ätzresiste und/oder Lötstoplacke keine der oben geschilderten Nachteile aufweisen.

Die Lösung der Aufgabe erfolgt durch Bindemittel gemäß der Ansprüche 1 bis 6. Die Bindemittel werden erfindungsgemäß für die Herstellung von Beschichtungssystemen und Gießharzmassen für die Elektronik und Elektrotechnik verwendet.

Es wurde gefunden, daß man UV-vorvernetzbare und thermisch nachhärtbare Epoxidharz-Bindemittelsysteme erhalten kann durch Umsetzung von Epoxidharzen mit mindestens zwei Epoxidgruppen mit Monocarbonsäuren im molaren Verhältnis der Epoxidgruppen zu den Carboxylgruppen von 1 : 0,5 - 0,9 und anschließender Umsetzung dieses Reaktionsproduktes mit ungesättigten Isocyanatocarbamatestern, die wiederum durch Umsetzung von Verbindungen mit mindestens zwei Isocyanatgruppen mit hydroxylgruppenhaltigen Acryl-, Methacryl- oder Cyanacrylestern hergestellt werden.

Aus DE-PS 23 43 085 ist bekannt, Epoxidharze mit Monocarbonsäuren umzusetzen und die dabei erhaltenen Reaktionsprodukte mit ungesättigten Isocyanatoallyl-(bzw. -methallyl)carbamanten zu verknüpfen, die durch Umsetzung von Polyisocyanaten mit einer hydroxysubstituierten Allylverbindung hergestellt werden. Diese Bindemittelsysteme werden unter der Einwirkung von Elektronenstrahlen zu einem Produkt mit hohen mechanischen, chemischen, thermischen und elektrischen Eigenschaftsniveau gehärtet. Jedoch besitzen diese Bindemittel für eine Anwendung zur Photovernetzung eine noch nicht ausrei-

chende Aushärtungsgeschwindigkeit, weswegen sie auch noch im Gemisch mit anderen strahlenhärtenden Monomeren eingesetzt werden.

Überraschenderweise sind die erfindungsgemäßen Bindemittelsysteme so reaktiv, daß sie auch ohne zusätzliche strahlenhärtende Verbindungen eine ausreichende Vernetzungsgeschwindigkeit besitzen, darüber hinaus nicht nur durch Elektronenstrahlen, sondern auch durch UV-Strahlung zur Vernetzung angeregt werden, und daß sie ohne Unterwanderungsvernetzung zu einer klebfreien Oberfläche reagieren. Dabei ist die Lagerstabilität bei Lagerung unter Lichtabschluß so gut, daß die Bindemittel keinen Zusatz weiterer Stabilisatoren benötigen.

Als Ausgangs-Epoxidharze für diese strahlungshärtbaren Bindemittelsysteme eignen sich prinzipiell alle Verbindungen, die mehr als 1 Epoxidgruppe pro Molekül enthalten. Sie werden erhalten entweder durch Umsetzung von Polyphenolen bzw. Polyalkoholen mit Epichlorhydrin z.B. nach den US-Patenten 24 67 171, 25 38 072, 25 58 959 sowie 26 94 694 oder durch Umsetzung von mehrfach ungesättigten Verbindungen mit organischen nischen Persäuren, wie sie unter anderem in den US-Patenten 28 53 498, 28 53 499, 28 29 135 beschrieben wird.

Vorteilhaft sind die Umsetzungsprodukte von Bisphenol A mit Epichlorhydrin in alkalischem Medium sowie die Polyglycidyläther von Resorcin, Butandiol, Hexandiol, Glycerin, Trimethylolpropan und Neopentylglykol. Bevorzugte Vertreter der durch Persäuren epoxidierten mehrfach ungesättigten Verbindungen sind epoxidierte Cycloolefine wie z.B. 3,4-Diepoxi-6-methyl-tetrahydro-benzyl-3',4'- diepoxi-6'-methyl-tetrahydro-benzoat, Vinylcyclohexendioxid u. a., sowie die Diglycidylester auf Basis von Anhydriden, wie Hexahydrophthalsäure- oder Methylnadicsäure-anhydrid.

Insbesondere bevorzugt sind alle Novolake, deren phenolische Hydroxylgruppen mit Glycidylresten veräthert sind, z.B. Bisphenol-A- oder Bisphenol-F-Novolak-Epoxidharze oder die entsprechenden Ortho- oder Para-Kresol-Epoxidharz-Novolaksysteme bzw. entsprechende chlorierte oder bromierte Produkte für schwer entflammbare Einstellungen. Die hierfür erforderlichen Novolake können hergestellt werden z.B. aus Basis von Phenol, ortho-, metha-, oder para-Kresol, Dimethylphenolen, höheralkylierten Phenolen, z.B. Nonylphenol, tert.-Butylphenol, oder halogenierten Phenolen sowie Polyphenolen, z.B. Resorcin, Hydrochinon, Brenzkatechin, Pyrogallol, Phloroglucin oder auch Trihydroxyphenylmethan oder Tetrahydroxyphenylethan durch Umsetzung mit Aldehyden, vorzugsweise Formaldehyd unter saurer Katalyse. Diese Epoxidverbindungen entsprechen der allgemeinen Formel I

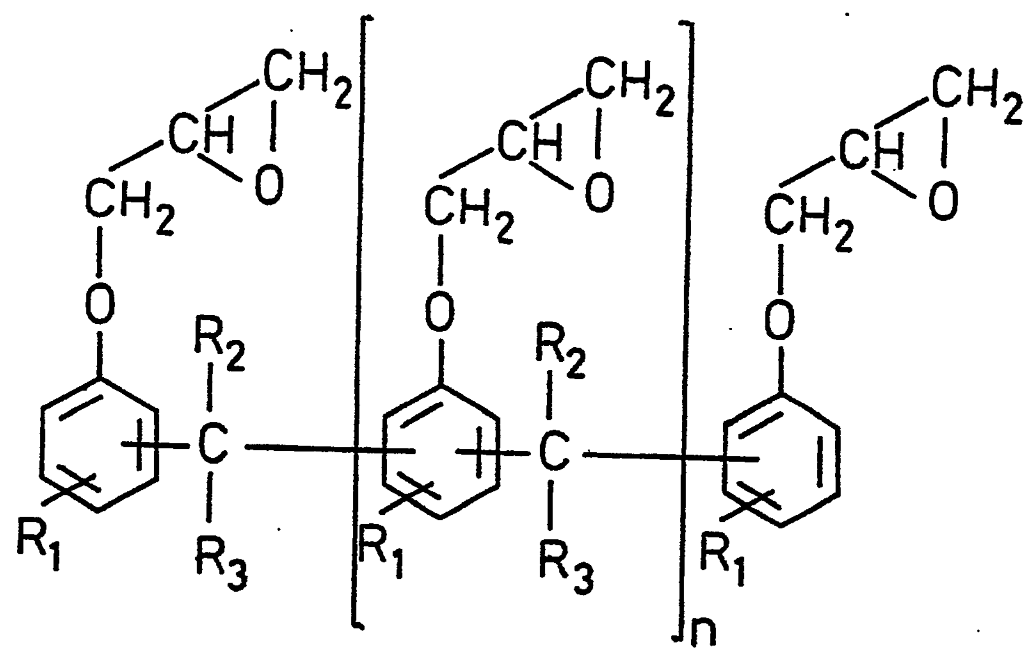

(I)

wobei $R_1$ = H-, $CH_3$-, $C_2H_5$-, $C_4H_9$-, Br-, Cl-
$R_2$ = H-, $CH_3$-
$R_1$ = H-, $CH_3$- ist.

Diesen Epoxidharzen können vor der Umsetzung zum Zwecke einer besseren Viskositätseinstellung vor der Umsetzung mit Carbonsäuren Zusätze von mono- und bifunktionellen Epoxidverbindungen sog. Reaktivverdünnern, zugegeben werden.

Als Carbonsäuren können alle gängigen Monocarbonsäuren verwendet werden. Beispiele hierfür sind die unverzweigten Monocarbonsäuren, wie die Ameisensäure, Essigsäure, Propionsäure, Milchsäure, Stearinsäure sowie auch verzweigte Carbonsäuren oder auch aromatische Carbonsäuren wie

Benzoesäure oder Zimtsäure sowie die Phenylessigsäure und bevorzugt ungesättigte Carbonsäuren vom Typ der Acrylsäure und Methacrylsäure, die eine Erhöhung der Netzwerkdichte bewirken.

Die Umsetzung erfolgt in an sich bekannter Weise durch Zusammenrühren der flüssigen oder in Lösung vorliegenden Reaktanten bei erhöhter Temperatur. Wichtig für die Eigenschaften des Endproduktes ist das molare Verhältnis der Epoxidgruppen zu den Carboxylgruppen, das in jedem Falle größer als 1 sein muß, daß freie Epoxidgruppen vorliegen, die nach der strahlungsbedingten Vernetzung eine thermische Härtung ermöglichen. Im allgemeinen liegt das Verhältnis zwischen 1 : 0,5 - 0,9.

Die Umsetzung der vorgenannten Epoxidharzsysteme mit den Monocarbonsäuren führt zu Umsetzungsprodukten, die sich in hervorragender Weise für eine weitere Umsetzung mit ungesättigten Isocyanatocarbamatestern eignen. Diese Isocyanatocarbamatester können hergestellt werden durch Umsetzung von Polyisocyanaten, z.B. 2,4- oder 2,6-Toluylendiisocyanaten bzw. auch deren Isomeren-Mischungen (Handelsbezeichnung z.B. "Desmodur® T 80"), Methylendiphenyldiisocyanat, 1,6-Hexamethylendiisocyanat, Hexandiisocyanat, 1,5-Naphthylendiisocyanat, Isophorondiisocyanat, Trimethylhexamethylendiisocyanat, 4,4', 4",-Triphenylmethan-Triisocyanat oder anderen bekannten Polyisocyanaten mit hydroxylgruppenhaltigen ungesättigten Estern.

Als hydroxylgruppenhaltige ungesättigte Ester eignen sich insbesondere Hydroxy-ethyl- oder -propylacrylat oder die entsprechenden Hydroxy-methacrylate oder Hydroxy-cyanacrylate, auch Butan- oder Hexandiolmonoacrylate.

Umgesetzt wird in an sich bekannter Weise im einfach molaren Verhältnis. Die ungesättigten Isocyanatocarbamatester entsprechen der allgemeinen Formel II

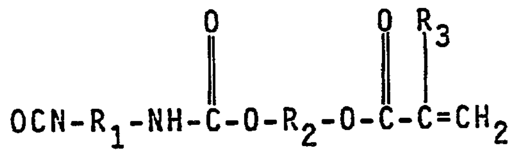

Die Umsetzung der carbonsäure-modifizierten Epoxidharze mit den ungesättigten Isocyanatocarbamatestern erfolgt ebenfalls in an sich bekannter Weise, wobei die eingesetzten Mengen so gewählt werden, daß die molaren Verhältnissse der vorhandenen Hydroxylgruppen zu den Isocyanatgruppen im Bereich von 1 : 0,8 bis 1 : 1 liegen. Diese Umsetzung führt zu sehr lagerstabilen und dabei gegenüber aktinischer Strahlung hochreaktiven Bindemittelsystemen, die sich in hervorragender Weise durch UV- oder Elektrodenstrahlen in wirtschaftlich interessanten kurzen Zeiten vorvernetzen und anschließend thermisch nachhärten lassen, wobei ein äußerst hohes Eigenschaftsniveau in Bezug auf die mechanischen und thermischen Eigenschaften sowie die Chemikalienbeständigkeit und die gewünschten elektrischen Eigenschaften erreicht wird. Das durchschnittliche Molekulargewicht kann wahlweise zwischen 500 und 10.000, je nach den geforderten Eigenschaften, eingestellt werden.

Aufgrund des Reaktionsverhaltens der erfindungsgemäßen Bindemittelsysteme und ihrer Eigenschaften nach der Härtung eignen sich hervorragend für die Herstellung von Lötstop- und Schutzlacken für Multilayer und gedruckten Schaltungen sowie als Gießmassen für die Elektronik und Elektrotechnik.

Eine optimale Eignung haben die Bindemittelsysteme, bei denen als Epoxidharze Novolake eingesetzt werden, deren phenolische Hydroxylgruppen mit Glycidylresten veräthert sind, weil die Novolak-Epoxidharzstrukturen die gezielte Ansteuerung hoher Netzwerkdichten erlauben, wodurch ein besonders hohes mechanisches, thermisches und chemikalienbeständiges Eigenschaftsniveau erreicht wird. Desgleichen eignen sich die erfindungsgemäßen Bindemittelsysteme in hervorragender Weise zur Herstellung von Photoresist- Materialien. Zur gezielten Einstellung der UV-Reaktivität können die allgemein üblichen Photoinitiatoren, z.B. Benzoine, oder Benzildimethylketal, Benzoinether, Benzophenone, Dithiobis(benzothialzol), Oxophosphorane und Kombinationen von aromatischen Sulfochloriden mit Disulfiden oder Xanthogenaten, zur Erhöhung der Polymerisationsgeschwindigkeit eingesetzt werden. Aushärtungszeiten von unter 30 s sind problemlos einstellbar, wobei klebfreie Filme mit hohem mechanischem, thermischem und elektrischem Eigenschaftsniveau und guter Chemikalienbeständigkeit erreicht werden.

Die strahlungsvernetzbaren Bindemittelsysteme werden vorzugsweise durch Zusatz von Katalysatoren für die thermische Nachhärtung zur Herstellung von I- oder II-Komponenten-Beschichtungssystemen weiter formuliert. Als latente Katalysatoren für die thermische Nachhärtung der Epoxidgruppen eignen sich z.B. Dicyandiamid oder entsprechende Derivate oder $BF_3$- oder auch $BCl_3$-Aminkomplexe.

Besonders vorteilhaft sind latente Katalysatoren, die sowohl bei der Vernetzung als Photoinitiatoren als auch bei der thermischen Härtung als Härtungskatalysatoren wirken, sind Verbindungen vom Typ des Michler's Ketons, die der allgemeinen Formel III entsprechen:

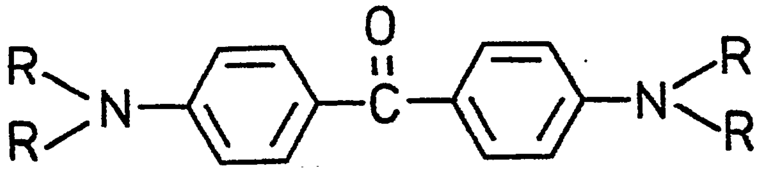

(III)

wobei R = $CH_3$- oder $C_2H_5$- ist.

Erreicht werden sehr kurze Aushärtungszeiten von 20 min bei Temperaturen von 120 - 230°C, je nachdem, welcher Glasumwandlungspunkt für das ausgehärtete Beschichtungssystem erreicht werden soll.

Zur Herstellung von Photoresists werden tragende kupferkaschierte Isolierplatten mit dem vorgenannten strahlungshärtbaren Epoxidharz-Bindemittelsystem im Siebdruck- oder Gieß-Vorhang-Verfahren aus der Schmelze oder unter Verwendung von Lösungsmitteln beschichtet. Nach der Trocknung bzw. Verdunstung des Lösungsmittels wird das Harz anschließend durch eine Negativ- oder Positiv-Maske hindurch der aktinischen Strahlung augesetzt, wobei die belichteten Stellen durch Polymerisation aushärten und die unpolymerisierten Anteile des Harzes mittels eines Lösungsmittels entfernt werden können. Das vorgenannte strahlungshärtbare Bindemittelsystem zeichnet sich besonders dadurch aus, daß die durch aktinische Strahlung induzierte Polymerisationsreaktion nicht unter den nicht belichteten Stellen forgesetzt wird, d.h. es tritt keine Unterwanderungsvernetzung auf. Die unpolymerisierten Anteile des Harzes werden anschließend mit einem Lösungsmittel entfernt. Nach vollzogenem Ätzprozeß kann der stehengebliebene Lack auf den Leiterbahnen durch thermische Nachhärtung in einen mechanisch dauerhaften, chemisch beständigen und thermisch und elektrisch hochwertigen Schutzlack überführt werden. Besonderes Merkmal der vorgenannten Erfindung im Vergleich zu den bisher üblichen Lötstoplacken ist die besonders gute Haftfestigkeit auf allen Druckträgern, was sich besonders beim Lötprozeß zeigt, wo die bisherigen UV-härtenden Lötstoplacke für den Druck auf Glanzzinn bzw. Blei/Zinn nur bedingt brauchbar sind. Besondere Erfindungsmerkmale sind außerdem die sehr gute Überdruck- bzw. Überlackierbarkeit und die Haftfestigkeit nachfolgender Drucke, z.B. Kennzeichnungsdrucke. Herausragendes Erfindungsmerkmal des strahlungsvernetzbaren Epoxidharzsystems ist eine besonders gute Durchhärtung, auch in den Tälern zwischen sehr hohen Leiterzügen und ein besonders günstiges Elastizitätsverhalten, z.B. bei Gitterschnitten schnitten. Aus den strahlungsvernetzbaren Bindemittelsystemen lassen sich daher wärmebeständige Abdecklacke als Lötstoplack herstellen, mit denen ausgewählte Flächen einer Leiterplatte festhaftend abgedeckt werden, damit sich bei dem später folgenden Lötvorgang kein Lötzinn absetzt. Komplett- Lötungen, bei denen viele Lötverbindungen in einem Arbeitsgang hergestellt werden, sind damit problemlos möglich.

Beispiel 1

Umsetzung von Epoxidharzen mit Carbonsäuren

1.1 In einem 2-l-Dreihalskolben mit Rührwerk, Rückflußkühler und Thermometer werden 1 Mol (= 619 g) eines Phenol-Novolak- Epoxidharzes mit einer durchschnittlichen Funktionalität von 3,5 vorgelegt. Hierzu werden 200 g Xylol gegeben und die Mischung auf etwa 80°C erhitzt. Bei dieser Temperatur werden innerhalb von 15 - 30 min 1,75 Mol (= 129,5 g) Propionsäure zugetropft und die Mischung 3 h bei 80°C gerührt. Danach wird das Xylol abdestilliert und die verbleibende Harzmasse in Ethylglykolacetat aufgenommen. Für eine 70%ige Harzlösung in Ethylglykolacetat werden folgende charakteristische Spezifikationsdaten erhalten:

Viskosität / 25°C: 2400 - 2500 mPa.s
nD / 25°C: 1,5200 - 1,5300
Säurezahl: 1 mg/g
Epoxidzahl: 8 - 10%

1.2 In einem 2-l-Dreihalskolben mit Rührwerk, Rückflußkühler und Thermometer werden 1 Mol (= 619 g) eines Phenol-Novolak-Epoxidharzes mit einer durchschnittlichen Funktionalität von 3,5 vorgelegt.

Hierzu werden 200 g Xylol gegeben und die Mischung auf etwa 80°C erhitzt. Bei dieser Temperatur werden innerhalb von 15 - 30 min 1,2 Mol (= 120 g) 1,2-Milchsäure (90%ig) zugetropft und die Mischung bei 80°C 2 h gerührt. Danach wird das Xylol abdestilliert und die verbleibende Harzmasse in Ethylglykolacetat aufgenommen. Für eine 70%ige Harzlösung in Ethylglykolacetat werden folgende charakteristische Spezifikationsdaten erhalten:

Viskosität / 25°C: 4000 - 6000 mPa.s
nD / 25°C: 1,5200 - 1,5300
Säurezahl: 1 mg/g
Epoxidzahl: 8 - 10%

Beispiel 2:

Umsetzen von Polyisocyanaten mit hydroxylgruppenhaltigen, ungesättigten Verbindungen

In einem 2-l-Dreihalskolben mit Rührwerk, Rückflußkühler und Thermometer werden 1 Mol (= 174 g) Toluylen- (2,4 und 2,6) diisocyanat-Isomerengemisch (Desmodur T 80®) vorgelegt. Hierzu werden 130 g Ethylglykolacetat als Lösungsmittel zugegeben. Dieser Lösung werden innerhalb von 30 min portionsweise 1 Mol Hydroxyethylacrylat (=116 g) zugegeben. Die Mischung erwärmt sich hierbei langsam auf etwa 80°C. Bei dieser Temperatur läßt man noch etwa 1 h nachreagieren. Zur Stabilisierung kann man 0,1 % eines Stabilisators, z.B. Hydrochinon, zugeben. Erhalten werden 420 g einer 70%igen Reaktionsmischung in Ethylglykolacetat.

Beispiel 3

Umsetzung von hydroxylgruppenhaltigen Epoxidharzen nach Beispiel 1 mit isocyanatgruppenhaltigen, ungesättigten Verbindungen entsprechend Beispiel 2

3.1 In einem 2-l-Dreihalskolben mit Rührwerk, Rückflußkühler und Thermometer werden 887 g eines Reaktionsproduktes gemäß Beispiel 2 vorgelegt und auf 60°C erwärmt. Bei dieser Temperatur werden portionsweise innerhalb von 1 h 860 g eines Umsetzungsproduktes, wie in Beispiel 1.1 beschrieben, zugegeben. Die Reaktionsmischung läßt man noch etwa 1 h bei 60°C nachreagieren. Danach wird abgekühlt. Erhalten wird eine Reaktionsmasse mit folgenden Eigenschaften:

Viskosität / 25°C: 12 000 - 15 000 mPa.s
nD / 25°C: 1,5100
Festkörpergehalt: 70%
Lagerstabilität: 6 Monate bei dunkler Lagerung

Das vorvernetzte Produkt ist beständig gegen übliche Entwicklungschemikalien wie z.B. Glykoläther oder Glykolester. Das thermisch nachgehärtete Produkt ist beständig gegen Methylenchlorid, gegen saure und alkalische Reinigungsbäder sowie gegen übliche Lötbäder. Die Dielektrizitätskonstante, der dielektrische Verlustfaktor, der Isolationswiderstand und die Kriechstromfestigkeit entsprechen den Anforderungen, die an hochwertige Multilayer gestellt werden.

3.2 In einem 2-l-Dreihalskolben mit Rührwerk, Rückflußkühler und Thermometer werden 887 g eines Reaktionsproduktes gemäß Beispiel 2 vorgelegt und auf 60°C erwärmt. Bei dieser Temperatur werden portionsweise innerhalb von 1 h 860 g eines Umsetzungsproduktes, wie in Beispiel 1.2 beschrieben, zugegeben. Die Reaktionsmischung läßt man noch etwa 1 h bei 60°C nachreagieren. Danach wird abgekühlt. Erhalten wird eine Reaktionsmasse mit folgenden Eigenschaften:

Viskosität / 25°C: etwa 15 000 - 20 000 mPa.s
nD / 25°C: 1,5100 - 1,5200
Festkörpergehalt: ca. 70%
Lagerstabilität: 6 Monate bei dunkler Lagerung

Das vorvernetzte Produkt ist beständig gegen übliche Entwicklungschemikalien wie z.B. Glykoläther oder Glykolester. Das thermisch nachgehärtete Produkt ist beständig gegen Methylenchlorid, gegen saure und alkalische Reinigungsbäder sowie gegen übliche Lötbäder. Die Dielektrizitätskonstante, der dielektrische Verlustfaktor, der Isolationswiderstand und die Kriechstromfähigkeit entsprechen den Anforderungen, die an hochwertige Multilayer gestellt werden.

Beispiel 4:

Verwendung der vorgenannten UV- und EB-vorvernetzbaren und thermisch nachhärtbaren Epoxidharz-Bindemittelsysteme für die Beschichtung von Leiterplatten

Die vorgenannten Bindemittelsysteme werden nach den in der Lackindustrie üblichen Methoden unter Verwendung von Farbstoffen, Füllstoffen und Additiven (Verlaufsmittel und Entschäumer) zur Einstellung der optimalen Verarbeitungseigenschaften formuliert. Als Lösungsmittelsysteme werden die in der Lackindustrie üblichen Lösungsmittel verwendet, z.B. Glykole, Glykolether und Glykolester. Mit auf diese Weise hergestellten Lack-Formulierungen wird jeweils eine kupferkaschierte Trägerplatte ganzflächig beschichtet. Die beschichteten Platten werden bei Raumtemperatur getrocknet. Danach wird eine Maske aufgelegt. Die nicht abgedeckten Stellen werden unter Verwendung einer UV-Lampe mit einem Strahlungsmaximum bei 380 nm belichtet. Innerhalb von 0,5 min ist eine klebfreie Oberfläche und eine ausreichende Vernetzung erreicht. Bei dem anschließenden Entwicklungsprozeß werden die nicht belichteten Stellen unter dem Einfluß der Entwicklerlösung (Propylenglykolmonomethylether) abgelöst. Die belichteten Stellen sind gegen die Entwicklerlösung aufgrund ihrer UV-Vorvernetzung beständig. Eine Unterwanderungsvernetzung kann nicht festgestellt werden.

Zur Anwendung als Lötstoplack werden die erhaltenen Trägerplatten anschließend einer thermischen Nachbehandlung unterzogen. Die Nachhärtung wird innerhalb von 20 - 30 min bei Temperaturen von 120 - 230°C durchgeführt, je nachdem, welcher Glasumwandlungspunkt für das ausgehärtete Beschichtungsmaterial gewünscht wird. Danach könnnen die Lötprozesse erfolgen.

Für die Herstellung von Multilayern werden nach der UV-Vorvernetzung die nicht belichteten Stellen ebenfalls zunächst mit geeigneten Lösungsmitteln abgelöst. Bei diesem Entwicklungsprozeß bleiben die Leiterbahnen durch den vorvernetzten UV-Lack geschützt. In einem anschließenden Ätzprozeß werden unter Verwendung von Ätzmittelsystemen (Ammoniumperoxydisulfat), die nicht geschützten Kupferflächen weggeätzt. Danach wird die erhaltene Trägerplatte mit einer weiteren Prepreg- und Kupferlage durch Verpressen zu Multilayern aufgebaut. Bei der Verpressung wird das UV-vorvernetzte Bindemittelsystem durch chemische Reaktion mit der nächsten Epoxidharz-Prepreglage homogen verbunden. Durch mehrmalige Wiederholung dieser Prozeßtechnologie werden Multilayer aufgebaut. Die Verwendung der erfindungsgemäßen Bindemittel bei diesen hergestellten Multilayern ergibt besonders hochwertige Fertigprodukte sowohl durch die gute Durchhärtung, die auch in Tälern zwischen sehr hohen Leiterzügen gegeben ist, als auch durch das günstige Elastizitätsverhalten.

**Patentansprüche**

1. Durch Strahlung vernetzbare Bindemittel, die erhalten werden durch Umsetzung einer Epoxidverbindung mit mehr als 1 Epoxidgruppe pro Molekül, mit einer oder mehreren Carbonsäuren im molaren Verhältnis der Epoxidgruppen zu den Carboxylgruppen von 1 : 0,5 - 0,9 und anschließender Umsetzung des Reaktionsproduktes mit einer oder mehreren ungesättigten Isocyanatocarbamatestern, die durch Umsetzung von Verbindungen mit mindestens zwei Isocyanatgruppen mit hydroxylgruppenhaltigen Acryl-, Methacryl- oder Cyanacrylsäureestern hergestellt werden.

2. Bindemittel nach Anspruch 1, dadurch gekennzeichnet, daß es als Epoxidharzkomponente einen Novolak enthält, dessen phenolische Hydroxylgruppen mit Glycidylgruppen veräthert sind.

3. Bindemittel nach Anspruch 2, dadurch gekennzeichnet, daß die Epoxidharzkomponente Zusätze von mono- oder bifunktionellen Epoxidverbindungen enthält.

4. Bindemittel nach den Ansprüchen 1 bis 3, dadurch gekennzeichnet, daß sie ein Durchschnittsmolekulargewicht von 500 - 10000 besitzen.

5. Bindemittel nach den Ansprüchen 1 bis 4, dadurch gekennzeichnet, daß die carbonsäuremodifizierten Epoxidharze und die Isocyanatocarbamatester im molaren Verhältnis der Hydroxylgruppen zu den Isocyanatgruppen von 1 : 0,8 bis 1 : 1 miteinander umgesetzt werden.

6. Bindemittel nach den Ansprüchen 1 bis 5, dadurch gekennzeichnet, daß sie als latente Katalysatoren für die Vernetzung und die thermische Härtung Verbindungen vom Typ des Michler's Ketons enthalten.

7. Verwendung der Bindemittel nach den Ansprüchen 1 bis 6 zur Herstellung von Beschichtungssystemen und Gießharzmassen für die Elektronik und Elektrotechnik.

**Claims**

1. Binders which are cross-linkable by radiation and which are obtained by reacting an epoxy compound with more than one epoxy group per molecule, with one or more monocarboxylic acids in a molar ratio of the epoxy groups to the carboxyl groups of 1:0.5–0.9, and subsequent reaction of the reaction product with one or more unsaturated isocyanatocarbamate esters in a molar ratio of the hydroxyl groups to the isocyanate groups of 1:0.8–1, the isocyanatocarbamate [sic] esters being produced by reacting compounds with at least two isocyanate groups with acrylic, methacrylic or cyanoacrylic acid esters containing hydroxyl groups.

2. A binder according to Claim 1, characterized in that it contains a novolak as an epoxy resin component, the phenolic hydroxyl groups of which are etherified with glycidyl groups.

3. Binders according to Claim 2, characterized in that the epoxy resin component contains additives of mono- or bifunctional epoxy compounds.

4. Binder according to Claims 1 to 3, characterized in that they have an average molecular weight of from 500 to 10,000.

5. Binders according to Claims 1 to 4, characterized in that the epoxy resins modified with carboxylic acid and the isocyanatocarbamate esters are reacted with one another in a molar ratio of the hydroxyl groups to the isocyanate groups of from 1:0.8 to 1:1.

6. Binders according to Claims 1 to 5, characterized in that they contain compounds of the type of Michler's ketone as latent catalysts for cross-linking and thermal curing.

7. The use of the binders according to Claims 1 to 6 for the preparation of coating systems and cast-resin compounds for the electronic and electrotechnical fields.

## Revendications

1. Liants réticulables par irradiation qui sont obtenus par réaction d'un composé époxydique comportant plus d'un groupe époxy par molécule, avec un ou plusieurs acides monocarboxyliques dans un rapport molaire des groupes époxy aux groupes carboxyles de 1:0,5-0,9 et par réaction subséquente du produit réactionnel avec un ou plusieurs esters isocyanatocarbamiques insaturés dans un rapport molaire des groupes hydroxyle aux groupes isocyanate de 1:0,8-1, les esters isocyanatocarbamiques étant préparés par réaction de composés comportant au moins deux groupes isocyanate avec des esters de l'acide acrylique, méthacrylique ou cyanoacrylique contenant des groupes hydroxyle.

2. Liant selon la revendication 1, caractérisé en ce qu'il contient, en tant que composant résine époxydique, une novolaque dont les groupes hydroxyle phénoliques sont éthérifiés par des groupes glycidyle.

3. Liant selon la revendication 2, caractérisé en ce que le composant résine époxydique comporte des additions de composés époxydiques mono- ou difonctionnels.

4. Liants selon les revendications 1 à 3, caractérisés en ce qu'ils présentent un poids moléculaire moyen de 500 à 10.000.

5. Liants selon les revendications 1 à 4, caractérisés en ce que les résines époxydiques modifiées par des acides carboxyliques et les esters isocyanatocarbamiques sont mis à réagir entre eux dans un rapport molaire des groupes hydroxyle aux groupes isocyanate de 1:0,8 à 1:1.

6. Liants selon les revendications 1 à 5, caractérisés en ce qu'ils contiennent, en tant que catalyseurs latents pour la réticulation et le durcissement thermique, des composés du type cétone de Michler.

7. Utilisation des liants selon les revendications 1 à 8 pour la préparation de systèmes de revêtement et de masses de résine à couler pour l'électronique et l'électrotechnique.